Europäisches Patentamt

European Patent Office

Office européen des brevets

(19)

(11) **EP 0 629 670 B1**

(12) **EUROPEAN PATENT SPECIFICATION**

(45) Date of publication and mention
of the grant of the patent:
**29.07.1998  Bulletin 1998/31**

(51) Int Cl.6: **C09D 7/12**, C09D 5/00

(21) Application number: **94304095.6**

(22) Date of filing: **07.06.1994**

(54) **Improvements relating to fast drying traffic paints**

Schnelltrocknende Fahrbahnmarkierungsfarbe

Peintures à séchage rapide pour le marquage de routes

(84) Designated Contracting States:
**AT BE DE DK ES FR GB IE IT NL PT SE**

(30) Priority: **17.06.1993  GB 9312482**

(43) Date of publication of application:
**21.12.1994  Bulletin 1994/51**

(73) Proprietor: **ROHM AND HAAS COMPANY**
**Philadelphia, Pennsylvania 19106-2399 (US)**

(72) Inventors:
 • **Clamen, Guy**
 **F-06650 (FR)**
 • **Jilek II, Josef, Jr.**
 **Vienna (AT)**
 • **Sanfilippo, Angelo**
 **F-06565 Valbonne (FR)**
 • **Trapani, Andrew P., Dr.**
 **F-06560 Valbonne (FR)**

(74) Representative: **Angell, David Whilton et al**
**ROHM AND HAAS (UK) LTD.**
**European Operations Patent Department**
**Lennig House**
**2 Mason's Avenue**
**Croydon CR9 3NB (GB)**

(56) References cited:
**EP-A- 0 200 249**

 • **DATABASE WPI Week 8835, 23 July 1988**
 **Derwent Publications Ltd., London, GB; AN**
 **88-246798 & JP-A-63 179 978 (MAEDA KOSEN K.**
 **K.)**
 • **DATABASE WPI Week 8724, 11 May 1987**
 **Derwent Publications Ltd., London, GB; AN**
 **87-167594 & JP-A-62 100 563 (KAWASAKI)**
 • **DATABASE WPI Week 7644, 12 September 1976**
 **Derwent Publications Ltd., London, GB; AN**
 **76-81836X & JP-A-51 103 134 (KANSAI PAINT)**
 • **DATABASE WPI Week 7622, 13 April 1976**
 **Derwent Publications Ltd., London, GB; AN**
 **76-40635X & JP-A-51 043 732 (KIKUSUI)**

**EP 0 629 670 B1**

**Description**

This invention relates to fast drying aqueous traffic (road marking) paints.

As used herein the term "fast drying" means a traffic paint having a dry-through time of less than 120 minutes at 23°C in conditions of no air flow and 90% relative humidity. Dry-through is defined by ASTM D-1640-83 with the modification that no thumb pressure is exerted.

Modern traffic paints are designed to dry rapidly at their surface, so that vehicles can drive across the paint only a few minutes after its application without picking any up on their tyres, and can be of two general types: melt-applied and fast-drying aqueous paint compositions. The present invention is concerned solely with the latter.

Relatively thick applications (thicker, when wet, than about 450 µm) of fast drying aqueous traffic paints tend to suffer from 'mud-cracking', which is the formation of cracks or channels within the paint film as it dries. The mud-cracking is believed to occur because the surface of the paint dries first, and then as the rest of the paint dries, it shrinks. The cracks have detrimental effects on the performance of the paints as road markings, particularly with regard to dirt retention and the consequent reduction in daylight visibility of the paint.

One known way to help reduce the mud-cracking is to add larger particulate fillers, such as quartz or silica particles. However, relatively large amounts of such additives (often about 30% by weight) are required, and this can have a detrimental effect on other properties of the paint. For instance, quartz itself can cause yellowing of the paint; other problems include sedimentation of the additive during storage, an undesirable roughness in the dried paint, and also a reduction in flexibility of the dried paint. Thus there is a need for a means of reducing the degree of cracking during drying of fast drying aqueous traffic paints which does not require the addition of large quantities of particulate additives.

EP-A-0 525 977 discloses a waterborne paint which is fast drying, but not a traffic paint.

JP-A-82 35144 discloses the use of glass fibre and asbestos in a slow drying paint to improve resistance to weather, water and abrasion after it has dried.

JP-A-63 179978 and JP-A-63 170478 also disclose the use of glass fibre in a slow drying paint to improve its durability after it has dried.

In JP-A-62 100563 a traffic paint is disclosed containing from 0.5 to 5.0% by weight of metal fibres, but this is a melt applied traffic paint not a fast drying aqueous paint.

None of this art deals with the problem of mud-cracking in fast drying aqueous traffic paints and which is the concern of the present invention.

In accordance with this invention the problem of mud-cracking in fast drying aqueous traffic paints is alleviated by incorporating into the aqueous traffic paint at least 0.1% by weight, based on the total weight of the composition, and preferably at least 0.3% by weight, of a fibrous filler composed of flexible synthetic fibres having an average length of at least 50 microns, more preferably from 100 to 500 µm. Preferred are low-density polyethylene fibres, such as are sold under the trade mark SYLOTHIX .

The traffic paint of the invention is preferably an aqueous acrylic traffic paint.

In accordance with the invention it has been found that the addition of such fibres to the aqueous traffic paint causes a significant reduction in the degree of cracking during drying. This result is achieved without detriment to other desirable properties in the traffic paint and at levels far below those required in the past for the above-mentioned particulate additives.

In addition to the synthetic flexible fibre component, the traffic paints of this invention may also contain a particulate filler, such as quartz or silica, preferably having a particle size of from 1 to 300 µm, preferably from 10 to 200 µm and most preferably from 30 to 200 µm. The amount of particulate additive added can be significantly less than that required in the prior art compositions, thereby greatly reducing or even avoiding altogether the above-mentioned drawbacks of using large amounts of such additives. Preferably the amount included is at least 5% by weight.

The invention is illustrated by the following Examples. Examples 1 to 3 are comparative.

EXAMPLES

The following fast drying aqueous paint formulation was prepared for evaluation of its cracking tendency during drying (the trade names used are all trade marks of the companies indicated).

| | |
|---|---|
| Primal E-2706 (Rohm and Haas) | 495.0g Acrylic binder |
| Orotan 850 (Rohm and Haas) | 8.1g Dispersant |
| Triton CF 10 (Union Carbide) | 2.2g Wetting agent |
| Drew TG 4250 (Drew-Ameroid) | 1.2g Defoamer |
| Durcal 5 (Omya) | 291.0g Calcium carbonate 5 microns |
| Durcal 40 (Omya) | 500.0g Calcium carbonate 40 microns |

(continued)

| Titan TR 92 (Tioxide) | 271.0g $TiO_2$ pigment |
|---|---|
| Water | 45.2g |

The above components were mixed for 20 minutes, and then the following added:

| Ethanol | 26.5g |
|---|---|
| Texanol(Eastman) | 26.5g Coalescent |
| Drew TG 4250 (Drew-Ameroid) | 1.2g Defoamer |
| Water | 55.9g |
| TOTAL | 1723.8g |

Example 1

The above paint was applied to a substrate at a wet film thickness of 600-700 μm, and the degree of cracking upon drying observed. On a scale of 1 to 10, with 10 being best (ie no cracks), this paint was rated 2: in other words, there was considerable cracking on the surface.

Example 2

To the above paint formulation was added 700g of micro glass beads, having a diameter of from 1 to 45 μm. After drying, this paint was rated 9.

Example 3

To the above formulation was added 700g of quartz having an average particle size of 90 μm. After drying, this paint was rated 9.

Although Examples 2 and 3 above effectively solve the problem of cracking, as explained above the large proportion of particulate additive required produces other detrimental effects.

Example 4

To the above formulation was added 10g of SYLOTHIX 52 (Grace), a polyethylene-based low density fibre having an average fibre length of 400 μm. After drying, this paint was rated 7-8.

Example 5

Example 4 was repeated, except that additionally 200g of quartz was added to the formulation. After drying, this paint was rated 9.

**Claims**

1. A fast drying, water-borne traffic paint characterised in that it contains, as an anti-mud cracking agent, at least 0.1% by weight, based on the weight of the paint, of a synthetic, flexible fibrous filler having an average fibre length in the range 50 to 500 μm.

2. A fast drying, water-borne traffic paint according to claim 1, containing at least 0.3% by wt.of the fibrous filler.

3. A fast drying, water-borne traffic paint according to claim 1 or 2, wherein the average length of the fibres in the fibrous filler is in the range 100 to 500μm.

4. A fast drying, water-borne traffic paint according to claim 1, 2or 3, wherein the water-borne traffic paint is an acrylic paint.

5. A fast drying, water-borne traffic paint according to any one of claims 1 to 4, wherein the fibres are low-density polyethylene fibres.

6. A fast drying, water-borne traffic paint according to any one of claims 1 to 5, which additionally contains at least 5% by weight , based on the weight of the paint, of a particulate additive having a particle size in the range 1 to 300 μm.

7. A fast drying, water-borne traffic paint according to claim 6, wherein the particulate additive has a particle size in the range 10 to 200 μm, preferably 30 to 200μm.

8. A fast drying, water-borne traffic paint according to claim 6 or 7, wherein the particulate additive is quartz or silica.

**Patentansprüche**

1. Schnelltrocknender Fahrbahnmarkierungsanstrichstoff auf Wasserbasis, dadurch gekennzeichnet, daß er als Antirißbildungsmittel mindestens 0,1 Gew.-%, basierend auf dem Gewicht des Anstrichstoffs, um einem synthetischen, biegsamen, faserförmigen Füllstoff mit einer mittleren Faserlänge im Bereich von 50 bis 500 μm enthält.

2. Schnelltrocknender Fahrbahnmarkierungsanstrichstoff auf Wasserbasis nach Anspruch 1, der mindestens 0,3 Gew.-% des faserförmigen Füllstoffs enthält.

3. Schnelltrocknender Fahrbahnmarkierungsanstrichstoff auf Wasserbasis nach Anspruch 1 oder 2, wobei die mittlere Länge der Fasern in dem faserförmigen Füllstoff im Bereich von 100 bis 500 μm liegt.

4. Schnelltrocknender Fahrbahnmarkierungsanstrichstoff auf Wasserbasis nach Anspruch 1, 2 oder 3, wobei der Fahrbahnmarkierungsanstrichstoff auf Wasserbasis ein Acrylanstrichstoff ist.

5. Schnelltrocknender Fahrbahnmarkierungsanstrichstoff auf Wasserbasis nach einem der Ansprüche 1 bis 4, wobei die Fasern Fasern aus Polyethylen niedriger Dichte sind.

6. Schnelltrocknender Fahrbahnmarkierungsanstrichstoff auf Wasserbasis nach einem der Ansprüche 1 bis 5, der zusätzlich mindestens 5 Gew.-%, basierend auf dem Gewicht des Anstrichstoffs, um einen teilchenförmigen Additiv mit einer Teilchengröße im Bereich von 1 bis 300 μm enthält.

7. Schnelltrocknender Fahrbahnmarkierungsanstrichstoff auf Wasserbasis nach Anspruch 6, wobei das teilchenförmige Additiv eine Teilchengröße im Bereich 10 bis 200 μm, vorzugsweise 30 bis 200 μm, aufweist.

8. Schnelltrocknender Fahrbahnmarkierungsanstrichstoff auf Wasserbasis nach Anspruch 6 oder 7, wobei das teilchenförmige Additiv Quarz oder Siliciumdioxid ist.

**Revendications**

1. Peinture résistante à l'eau pour marquage routier, à séchage rapide, caractérisée en ce qu'elle contient, en tant qu'agent anti-fissure de retrait, au moins 0,1 % en poids, par rapport au poids de la peinture, d'une charge fibreuse souple synthétique ayant une longueur moyenne des fibres comprise entre 50 et 500 μm.

2. Peinture résistante à l'eau pour marquage routier, à séchage rapide, selon la revendication 1, contenant au moins 0,3 % en poids de la charge fibreuse.

3. Peinture résistante à l'eau pour marquage routier, à séchage rapide, selon la revendication 1 ou 2, dans laquelle la longueur moyenne des fibres de la charge fibreuse est comprise entre 100 et 500 μm.

4. Peinture résistante à l'eau pour marquage routier, à séchage rapide, selon la revendication 1, 2 ou 3, dans laquelle la peinture résistante à l'eau pour marquage routier est une peinture acrylique.

5. Peinture résistante à l'eau pour marquage routier, à séchage rapide, selon l'une quelconque des revendications 1 à 4, dans laquelle les fibres sont des fibres de polyéthylène basse densité.

6. Peinture résistante à l'eau pour marquage routier, à séchage rapide, selon l'une quelconque des revendications 1 à 5, qui contient en outre au moins 5 % en poids, par rapport au poids de la peinture, d'un additif particulaire ayant une granulométrie comprise entre 1 et 300 µm.

7. Peinture résistante à l'eau pour marquage routier, à séchage rapide, selon la revendication 6, dans laquelle l'additif particulaire a une granulométrie comprise entre 10 et 200 µm, de préférence entre 30 et 200 µm.

8. Peinture résistante à l'eau pour marquage routier, à séchage rapide, selon la revendication 6 ou 7, dans laquelle l'additif partculaire est le quartz ou la silice.